# EUROPEAN PATENT APPLICATION

(11) **EP 4 803 587 A1**
(43) Date of publication of application: **09.09.2026**
(21) Application number: 24886025.6
(22) Date of filing: 19.09.2024
(51) Int. Cl.: C09J 4/06, C09J 7/10, C09J 7/30, C08F 265/06, C08F 220/18, C08F 220/20, C08F 222/10, C08F 2/50

(54) **ADHESIVE COMPOSITION AND TRANSPARENT ADHESIVE TAPE COMPRISING SAME**

(30) Priority: 01.11.2023 KR 20230148811
(71) Applicant: KCC GLASS Corporation, Seoul 06526 (KR)
(72) Inventor: LEE, Hyang Moo, Daegu 42759 (KR); YUN, Sang Cheol, Incheon 21328 (KR); LEE, Dong Ryool, Yongin-si, Gyeonggi-do 16850 (KR)
(74) Representative: Pfenning, Meinig & Partner mbB
(86) International application number: PCT/KR2024/014116
(87) International publication number: WO 2025/095347

(57) **Abstract**

The present invention relates to an adhesive composition which suppresses bubble generation and has excellent transparency, adhesiveness, mechanical properties, and long-term reliability, and a transparent adhesive tape comprising same.

## Description

### [Technical Field]

The present invention relates to an adhesive composition that suppresses bubble generation and exhibits excellent transparency, adhesiveness, mechanical properties, and long-term reliability, and to a transparent adhesive tape comprising the same.

### [Background Art]

Optically clear adhesives (OCAs) are widely used in a process of bonding glass to an LCD and a display module including the same, and various studies are being conducted to improve the properties thereof. For example, Korean Patent No. 10-1288238 discloses an acrylic resin composition suitable for an adhesive having excellent durability, in which no change in the appearance of an optical laminate occurs even under high-temperature and high-humidity conditions and repeated heating and cooling.

Recently, due to cost considerations or safety-related issues of electric vehicles, attempts to use plastic plates containing polycarbonate (PC), polymethyl methacrylate (PMMA), and the like, in addition to glass, are increasing. When a conventional optical adhesive is applied to such a plastic plate, a problem arises in that bubbles are generated due to outgassing from the plastic material.

Accordingly, there is a demand for the development of an adhesive composition capable of suppressing bubble generation due to outgassing when applied to a plastic substrate.

### [Disclosure]

### [Technical Problem]

The present invention is directed to providing an adhesive composition that suppresses bubble generation and exhibits excellent transparency, adhesiveness, mechanical properties, and long-term reliability, and a transparent adhesive tape including the same.

### [Technical Solution]

One aspect of the present invention provides an adhesive composition comprising: monomers comprising 2-ethylhexyl acrylate (EHA), isobornyl acrylate (IBOA), and 2-hydroxyethyl acrylate (HEA); and a hexanediol diacrylate (HDDA) crosslinking agent, wherein the adhesive composition comprises, based on the total weight of the monomers, 50 to 60 wt% of 2-ethylhexyl acrylate (EHA), 20 to 30 wt% of isobornyl acrylate (IBOA), and 15 to 25 wt% of 2-hydroxyethyl acrylate (HEA), and comprises 0.05 to 0.5 parts by weight of hexanediol diacrylate (HDDA) based on 100 parts by weight of the monomers.

### [Advantageous Effects]

The present invention provides an adhesive composition that suppresses bubble generation and exhibits excellent transparency, adhesiveness, mechanical properties, and long-term reliability, and a transparent adhesive tape including the same. Since the adhesive composition according to the present invention suppresses bubble generation caused by outgassing when applied to a plastic substrate under high-temperature or high-temperature and high-humidity conditions, it is highly suitable for use as an optical adhesive for plastic substrates. In addition, the adhesive composition of the present invention not only has excellent transparency, adhesiveness, mechanical properties, and long-term reliability, but also exhibits excellent adhesiveness to both glass and plastic substrates. A transparent adhesive tape including the adhesive composition of the present invention is suitable for use as a transparent adhesive tape for automotive applications.

### [Description of Drawings]

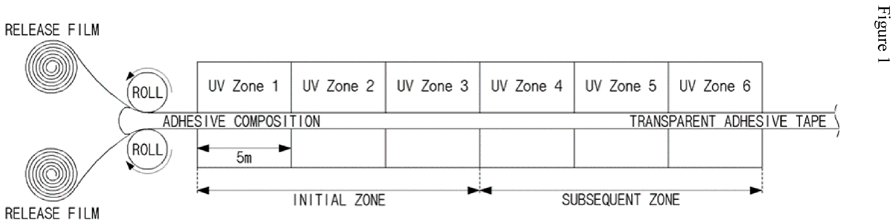

FIG. 1 illustrates a process of manufacturing a transparent adhesive tape from an adhesive composition.

### [Best Mode]

Hereinafter, the present invention will be described in detail. However, the present invention is not limited only to the following description, and each component may be variously modified or selectively used in combination as necessary. Therefore, it should be understood that the present invention includes all modifications, equivalents, and substitutes included within the spirit and technical scope of the present invention.

As used herein, "viscosity" is measured by a conventional method known in the art, and for example, may be measured using a Brookfield rotational viscometer at room temperature (25 °C).

### <Adhesive Composition>

The adhesive composition of the present invention includes monomers including 2-ethylhexyl acrylate (EHA), isobornyl acrylate (IBOA), and 2-hydroxyethyl acrylate (HEA).

2-ethylhexyl acrylate (EHA) serves to impart adhesiveness. 2-ethylhexyl acrylate (EHA) may be included in an amount of 50 to 60 wt%, for example, 55 to 60 wt%, based on the total weight of the monomers. When the content of 2-ethylhexyl acrylate is less than the above range, adhesive strength may decrease, and when it exceeds the above range, the storage modulus and elongation properties may deteriorate.

Isobornyl acrylate (IBOA) serves to control adhesive strength. Isobornyl acrylate (IBOA) may be included in an amount of 20 to 30 wt%, for example, 20 to 25 wt%, based on the total weight of the monomers. When the content of isobornyl acrylate is less than the above range, adhesion to a plastic may decrease, and when it exceeds the above range, the composition may become brittle.

2-hydroxyethyl acrylate (HEA) serves to prevent fogging. 2-hydroxyethyl acrylate (HEA) may be included in an amount of 15 to 25 wt%, for example, 15 to 20 wt%, based on the total weight of the monomers. When the content of 2-hydroxyethyl acrylate (HEA) is less than the above range, fogging may occur, and when it exceeds the above range, adhesive strength may decrease.

The adhesive composition of the present invention includes hexanediol diacrylate (HDDA) as a crosslinking agent. Hexanediol diacrylate (HDDA) may be included in an amount of 0.05 to 0.5 parts by weight, for example, 0.1 to 0.3 parts by weight, based on 100 parts by weight of the monomers. When the content of hexanediol diacrylate (HDDA) is less than the above range, the gel content may decrease, and the storage modulus and elongation properties may deteriorate. When it exceeds the above range, the composition may become brittle.

The adhesive composition of the present invention includes a photoinitiator. As the photoinitiator, a photoinitiator commonly used in the art may be used without particular limitation. The photoinitiator may be included in an amount of 0.01 to 0.5 parts by weight, for example, 0.1 to 0.4 parts by weight, based on 100 parts by weight of the monomers. When the content of the photoinitiator is less than the above range, polymerization and crosslinking may proceed insufficiently, and when it exceeds the above range, the molecular weight of the resin may become excessively small.

The adhesive composition of the present invention may be prepared by a method comprising mixing monomers comprising 2-ethylhexyl acrylate (EHA), isobornyl acrylate (IBOA), and 2-hydroxyethyl acrylate (HEA) with a photoinitiator (first step), preparing a resin by irradiating the mixture with ultraviolet (UV) light (second step), and mixing hexanediol diacrylate (HDDA), which is a crosslinking agent, and a photoinitiator with the resin (third step).

Based on 100 parts by weight of the monomers, the content of the photoinitiator added in the first step may be 0.005 to 0.1 parts by weight, for example, 0.01 to 0.1 parts by weight, and the content of the photoinitiator added in the third step may be 0.01 to 0.4 parts by weight, for example, 0.1 to 0.3 parts by weight.

When the content of the photoinitiator in the first step is less than the above range, the polymerization rate may slow down, resulting in a decrease in reaction yield. When it exceeds the above range, the molecular weight may decrease, resulting in a decrease in gel content and solid content after coating and curing, and a deterioration in mechanical properties. When the content of the photoinitiator in the third step is less than the above range, the curing rate may slow down, resulting in a decrease in coating yield and solid content. When it exceeds the above range, the degree of crosslinking may decrease, resulting in a decrease in gel content and a deterioration in mechanical properties.

The UV irradiation may be performed using low-pressure UV until the resin reaches a viscous liquid state having a viscosity (at 25 °C) of 800 to 5,000 cPs. The resin is in a mixed state of a polymer and monomers, and for example, may include 4 to 10 wt% of the polymer and 90 to 96 wt% of unreacted monomers. The adhesive composition, which is a final product, is in a viscous liquid state having a viscosity (at 25 °C) of 800 to 5,000 cPs. When the viscosities of the resin and the adhesive composition are less than the above ranges, it may be difficult to control the thickness during coating, making it difficult to obtain a coating film having a desired thickness. When they exceed the above ranges, coating processability may deteriorate, making it difficult to obtain a film having a uniform thickness.

### <Transparent Adhesive Tape>

The present invention provides a transparent adhesive tape comprising the above-described adhesive composition. The transparent adhesive tape may comprise a lower release film, an adhesive layer formed of the adhesive composition, and an upper release film. The transparent adhesive tape may be manufactured by a manufacturing method comprising: forming a laminate including a lower release film, an adhesive layer formed of the adhesive composition, and an upper release film; and irradiating the upper release film and the lower release film of the laminate with UV light.

For example, the laminate may be manufactured by injecting the adhesive composition between the lower release film and the upper release film. As another example, the laminate may be manufactured by coating the adhesive composition on the lower release film and laminating the upper release film on the coating.

For example, the lower release film may be a medium-release film, and a release force thereof may be 100 gf/in or less. For example, the upper release film may be a light-release film, and a release force thereof may be 5 to 30 gf/in. The release force of the lower release film may be 2 to 4 times the release force of the upper release film.

The UV irradiation may include a first irradiation and a second irradiation, and the intensity of the second irradiation may be greater than the intensity of the first irradiation. When the intensity of the second irradiation is equal to or less than the intensity of the first irradiation, unreacted monomers may remain, resulting in a decrease in solid content, and bubbles may be generated after adhesion.

For example, the intensity of the first irradiation may be 5 mW/cm² or less, and the intensity of the second irradiation may be greater than the intensity of the first irradiation. When irradiated with a strong intensity from the beginning, for example, a first irradiation intensity of more than 5 mW/cm², the degree of crosslinking and molecular weight may decrease, resulting in a deterioration in storage modulus and elongation properties, and as a result, the gel content and solid content may decrease.

For example, as shown in FIG. 1 below, the UV irradiation may be performed while passing through six UV zones configured at 5 m intervals. The first irradiation may be performed in initial UV zones (UV zones 1 to 3), and the second irradiation may be performed in subsequent UV zones (UV zones 4 to 6). In this case, excellent properties such as transparency, adhesiveness, mechanical properties, and long-term reliability may be achieved through the initial UV zones, and the adhesive composition may be completely cured and a high gel content and solid content may be ensured while bubble generation is suppressed through the subsequent UV zones.

The total light irradiation dose during the UV irradiation may be 1,500 mJ/cm² or more, for example, 1,500 to 3,000 mJ/cm², and as another example, 2,000 to 3,000 mJ/cm². When the total light irradiation dose is less than this range, bubbles may be generated, and the gel content and solid content may decrease.

The transparent adhesive tape of the present invention has a high solid content and a high degree of crosslinking. The transparent adhesive tape has a solid content of 98.5% or more, for example, 98.5 to 99.8%, and a gel content of 85% or more, for example, 85 to 98%. When the solid content is less than the above range, bubbles may be generated on a substrate surface during adhesion due to generated volatile materials, and when the gel content is less than the above range, storage modulus and elongation properties may deteriorate.

### [Modes of the Invention]

Hereinafter, the present invention will be described in more detail through Examples. However, the following Examples are provided only to facilitate understanding of the present invention, and the scope of the present invention is not limited to these examples in any way.

### [Examples 1 to 8: Preparation of Adhesive Compositions]

Resin components were introduced into a reactor according to Table 1 below, and nitrogen was injected into the reactor for 30 minutes to remove dissolved oxygen, followed by irradiation with UV light using a low-pressure UV lamp (TL-8W, manufactured by Philips). After the polymerization reaction started, the reaction was terminated while monitoring an increase in viscosity. The reaction was terminated by turning off the low-pressure UV lamp and injecting air. A crosslinking mixture was uniformly blended into the prepared resin (viscosity (at 25 °C) of 2,000 to 4,000 cPs, solid content of 5 to 10%) to prepare each adhesive composition of Examples.

### [Comparative Examples 1 to 10: Preparation of Adhesive Compositions]

Each adhesive composition of Comparative Examples was prepared in the same manner as in Examples, except that the conditions were changed as shown in Table 2 below.

**[Table 1]**

| Components (parts by weight) | | Examples | | | | | | | |
|---|---|---|---|---|---|---|---|---|---|
| | | 1 | 2 | 3 | 4 | 5 | 6 | 7 | 8 |
| Resin | EHA | 55 | 55 | 60 | 60 | 60 | 50 | 50 | 50 |
| | IBOA | 25 | 25 | 20 | 20 | 25 | 25 | 30 | 30 |
| | HEA | 20 | 20 | 20 | 20 | 15 | 25 | 20 | 20 |
| | Photoinitiator | 0.01 | 0.01 | 0.01 | 0.01 | 0.05 | 0.01 | 0.01 | 0.01 |
| Crosslinking mixture | HDDA | 0.3 | 0.1 | 0.3 | 0.1 | 0.3 | 0.1 | 0.1 | 0.1 |
| | Photoinitiator | 0.1 | 0.1 | 0.1 | 0.1 | 0.3 | 0.1 | 0.1 | 0.1 |

**[Table 2]**

| Components (parts by weight) | | Comparative Examples | | | | | | | | | |
|---|---|---|---|---|---|---|---|---|---|---|---|
| | | 1 | 2 | 3 | 4 | 5 | 6 | 7 | 8 | 9 | 10 |
| Resin | EHA | 45 | 45 | 65 | 55 | 55 | 45 | 45 | 65 | 70 | 65 |
| | IBOA | 15 | 15 | 0 | 35 | 35 | 35 | 35 | 20 | 30 | 20 |
| | HEA | 40 | 40 | 35 | 10 | 10 | 20 | 20 | 15 | 0 | 15 |
| | Photoinitiator | 0.01 | 0.01 | 0.01 | 0.01 | 0.01 | 0.01 | 0.01 | 0.01 | 0.01 | 0 |
| Crosslinking mixture | HDDA | 0.1 | 0.1 | 0.1 | 0.3 | 0.3 | 0.3 | 0.3 | 0.3 | 0.3 | 0.6 |
| | Photoinitiator | 0.1 | 0.1 | 0.1 | 0.1 | 0.1 | 0.1 | 0.1 | 0.1 | 0.1 | 0.7 |

| | | | | | | | | | | | |
|---|---|---|---|---|---|---|---|---|---|---|---|
| EHA: 2-ethylhexyl acrylate IBOA: isobornyl acrylate HEA: 2-hydroxyethyl acrylate HDDA: hexanediol diacrylate Photoinitiator: Irgacure 651 | | | | | | | | | | | |

### [Manufacture of Transparent Adhesive Tapes]

As shown in FIG. 1, each adhesive composition prepared in Examples and Comparative Examples was injected to a thickness of 400 µm between upper and lower release films, and then irradiated with UV light using a low-pressure UV lamp under the conditions shown in Tables 3 and 4 below to manufacture each transparent adhesive tape of Examples and Comparative Examples. The length of each UV zone was set to 5 m.

**[Table 3]**

| Components (parts by weight) | | Examples | | | | | | | |
|---|---|---|---|---|---|---|---|---|---|
| | | 1 | 2 | 3 | 4 | 5 | 6 | 7 | 8 |
| Total light irradiation dose (mJ/cm²) | | 2,023 | 3,000 | 2,000 | 2,000 | 3,000 | 3,000 | 3,000 | 1,682 |
| Line speed (m/min) | | 4.3 | 2.9 | 3.3 | 3.3 | 2.9 | 2.9 | 2.9 | 6.6 |
| First irradiation intensity (mW/cm²) | UV Zone 1 | 1 | 1 | 2 | 1 | 1 | 1 | 1 | 4 |
| | UV Zone 2 | 2 | 2 | 3 | 1 | 2 | 2 | 2 | 4 |
| | UV Zone 3 | 5 | 5 | 3 | 1 | 5 | 5 | 5 | 5 |
| Second irradiation intensity (mW/cm²) | UV Zone 4 | 7 | 7 | 4 | 5 | 7 | 7 | 7 | 7 |
| | UV Zone 5 | 7 | 7 | 5 | 7 | 7 | 7 | 7 | 8 |
| | UV Zone 6 | 7 | 7 | 5 | 7 | 7 | 7 | 7 | 9 |

**[Table 4]**

| Components (parts by weight) | | Comparative Examples | | | | | | | | | |
|---|---|---|---|---|---|---|---|---|---|---|---|
| | | 1 | 2 | 3 | 4 | 5 | 6 | 7 | 8 | 9 | 10 |
| Total light irradiation dose (mJ/cm²) | | 1,012 | 1,000 | 2,000 | 2,023 | 2,023 | 2,023 | 3,103 | 4,500 | 2,023 | 2,023 |
| Line speed (m/min) | | 8.6 | 6.6 | 3.3 | 4.3 | 8.6 | 4.3 | 2.9 | 10 | 4.3 | 4.3 |
| First irradiation intensity (mW/cm²) | UV Zone 1 | 1 | 2 | 2 | 1 | 14 | 1 | 7 | 25 | 1 | 1 |
| | UV Zone 2 | 2 | 3 | 3 | 2 | 14 | 2 | 7 | 25 | 2 | 2 |
| | UV Zone 3 | 5 | 3 | 3 | 5 | 14 | 5 | 5 | 25 | 5 | 5 |
| Second irradiation intensity (mW/cm²) | UV Zone 4 | 7 | 3 | 3 | 7 | 10 | 7 | 5 | 25 | 7 | 7 |
| | UV Zone 5 | 7 | 5 | 5 | 7 | 4 | 7 | 3 | 25 | 7 | 7 |
| | UV Zone 6 | 7 | 6 | 6 | 7 | 2 | 7 | 3 | 25 | 7 | 7 |

### [Evaluation of Properties]

The properties of the transparent adhesive tapes of the respective Examples and Comparative Examples were evaluated according to the following methods, and the results are shown in Tables 5 and 6 below.

### Gel Content (Gel%)

Each transparent adhesive tape of Examples and Comparative Examples was immersed in acetone for 24 hours or more, filtered, and dried in an oven at 120 °C for 30 minutes. Afterward, the gel content was evaluated based on the weight change before and after immersion.

### Solid Content (NV%)

Each transparent adhesive tape of Examples and Comparative Examples was dried in a forced circulation oven at 120 °C for 30 minutes, and then the solid content was evaluated based on the weight change before and after drying.

### Adhesive Strength

Each transparent adhesive tape of Examples and Comparative Examples was attached to a 25 µm PET film, cut to a width of 1 inch, attached to soda-lime glass, and left for 24 hours to prepare a specimen. The adhesive strength of each specimen was evaluated by performing a 180° peel test at a speed of 300 mm/min at room temperature using a UTM device (ST-1003, manufactured by SALT Co., Ltd.).

### Transmittance and Haze

Two pieces of soda-lime glass were laminated using each transparent adhesive tape of Examples and Comparative Examples to prepare a specimen having a structure of glass/transparent adhesive tape/glass. After leaving each specimen for 24 hours, the transmittance and haze were measured using a transmittance meter (haze-gard i, manufactured by BYK).

### Tensile Strength and Elongation

Each transparent adhesive tape of Examples and Comparative Examples was overlapped and attached to a thickness of 1 mm, cut to a width of 1 cm, and measured using a UTM device (ST-1003, manufactured by SALT Co., Ltd., at a speed of 100 mm/min).

### Long-Term Reliability

Two pieces of soda-lime glass were laminated using each transparent adhesive tape of Examples and Comparative Examples to prepare a specimen having a structure of glass/transparent adhesive tape/glass. After storing each specimen under respective conditions for 1,000 hours, the transmittance, haze, and color difference (b*) were analyzed to evaluate the long-term reliability according to the following criteria.

### [Evaluation criteria]

Good: Transmittance of 90% or more, haze of less than 1%, and b* change of 0.3 or less

### Bubble Generation Suppression

Each specimen was prepared by sequentially laminating the PC side of a PC/PMMA coextruded sheet, each transparent adhesive tape of Examples and Comparative Examples, and glass. After leaving each specimen for 24 hours, it was placed in a constant temperature and humidity chamber under conditions of 85 °C and 85% R.H. for one week to observe whether bubbles were generated.

**[Table 5]**

| Properties | | Target | Examples | | | | | | | |
|---|---|---|---|---|---|---|---|---|---|---|
| | | | 1 | 2 | 3 | 4 | 5 | 6 | 7 | 8 |
| Gel content (%) | | 85-98 | 93 | 92 | 92 | 90 | 92 | 88 | 89 | 86 |
| NV (Solid content) (%) | | 98.5-99.8 | 99.4 | 99.3 | 99.1 | 99.5 | 99.2 | 99 | 99.1 | 98.6 |
| Adhesive force (gf/in) | | 2000-3500 | 2500 | 2800 | 2300 | 2200 | 2700 | 2400 | 2500 | 2700 |
| Transmittance (%) | | 90 or more | 94 | 94 | 93.7 | 93.6 | 93.9 | 93.3 | 93.6 | 95 |
| Haze (%) | | Less than 1 | 0.41 | 0.58 | 0.45 | 0.46 | 0.43 | 0.32 | 0.34 | 0.43 |
| Tensile strength (MPa) | | 0.3 or more | 0.56 | 0.37 | 0.47 | 0.32 | 0.43 | 0.57 | 0.54 | 0.31 |
| Elongation (%) | | 700 or more | 837 | 1037 | 923 | 1051 | 917 | 810 | 783 | 1133 |
| Long-term reliability (1,000 h) | High temp. (105 °C) | Good | Good | Good | Good | Good | Good | Good | Good | Good |
| | Low temp. (-40 °C) | Good | Good | Good | Good | Good | Good | Good | Good | Good |
| | High temp./high humidity (85 °C, 85% R.H.) | Good | Good | Good | Good | Good | Good | Good | Good | Good |
| | Weather resistance (6 mW/cm², 38 °C) | Good | Good | Good | Good | Good | Good | Good | Good | Good |
| Bubble generation | 300 µm or more | None | None | None | None | None | None | None | None | None |
| | Less than 300 µm (count) | 3 or less | None | None | None | None | None | 2 | 1 | 3 |

**[Table 6]**

| Properties | | Target | Comparative Examples | | | | | | | | | |
|---|---|---|---|---|---|---|---|---|---|---|---|---|
| | | | 1 | 2 | 3 | 4 | 5 | 6 | 7 | 8 | 9 | 10 |
| Gel content (%) | | 85-98 | 86 | 84 | 90 | 91 | 76 | 90 | 77 | 68 | 91 | |
| NV (Solid content) (%) | | 98.5-99.8 | 98 | 97.9 | 99 | 98.9 | 97.6 | 99 | 98.2 | 97.6 | 99.1 | |
| Adhesive force (gf/in) | | 2000-3500 | 900 | 1000 | 1700 | 2500 | 2700 | 1900 | 2100 | 2900 | 2500 | |
| Transmittance (%) | | 90 or more | 94 | 93.8 | 93.8 | 93.5 | 93.9 | 92.6 | 94.2 | 94.4 | 93.4 | |
| Haze (%) | | Less than 1 | 0.4 | 0.43 | 0.59 | 0.49 | 0.39 | 0.34 | 0.47 | 0.38 | 0.31 | |
| Tensile strength (MPa) | | 0.3 or more | 0.62 | 0.59 | 0.37 | 0.57 | 0.28 | 0.62 | 0.52 | 0.28 | 0.31 | |
| Elongation (%) | | 700 or more | 537 | 579 | 1129 | 931 | 1213 | 582 | 673 | 1235 | 767 | |
| Long-term reliability (1,000 h) | High temp. (105 °C) | Good | Poor | Poor | Poor | Good | Poor | Poor | Good | Good | Good | Not meas urable |
| | Low temp. (-40 °C) | Good | Good | Good | Good | Good | Good | Good | Good | Good | Good | |
| | High temp./high humidity (85 °C, 85% R.H.) | Good | Poor | Poor | Poor | Poor | Poor | Poor | Good | Good | Poor | |
| | Weather resistance (6 mW/cm², 38 °C) | Good | Good | Good | Good | Good | Good | Good | Good | Good | Good | |
| Bubble generation | 300 µm or more | None | Occu rred | Occu rred | None | None | Occu rred | Occu rred | Occu rred | Occu rred | Occu rred | |
| | Less than 300 µm (count) | 3 or less | More than 3 | More than 3 | More than 3 | More than 3 | More than 3 | More than 3 | More than 3 | More than 3 | More than 3 | |

As shown in Tables 5 and 6, the transparent adhesive tapes of Examples 1 to 8 using the adhesive compositions according to the present invention exhibited excellent overall properties, including gel content, solid content, adhesive strength, transmittance, haze, mechanical properties (tensile strength and elongation), long-term reliability, and suppression of bubble generation. In contrast, the transparent adhesive tapes of Comparative Examples 1 to 9 using the adhesive compositions not satisfying the composition of the present invention exhibited generally inferior properties compared to those of Examples. In Comparative Example 10, meanwhile, polymerization occurred insufficiently to form an adhesive composition having a low viscosity, and an adhesive tape having a uniform thickness could not be formed, making it impossible to evaluate its physical properties.

### [Industrial Applicability]

The present invention provides an adhesive composition that suppresses bubble generation and exhibits excellent transparency, adhesiveness, mechanical properties, and long-term reliability, and a transparent adhesive tape comprising the same.

## Claims

1. An adhesive composition comprising:
monomers comprising 2-ethylhexyl acrylate (EHA), isobornyl acrylate (IBOA), and 2-hydroxyethyl acrylate (HEA); and
a hexanediol diacrylate (HDDA) crosslinking agent,
wherein the adhesive composition comprises, based on the total weight of the monomers, 50 to 60 wt% of 2-ethylhexyl acrylate (EHA), 20 to 30 wt% of isobornyl acrylate (IBOA), and 15 to 25 wt% of 2-hydroxyethyl acrylate (HEA), and
0.05 to 0.5 parts by weight of hexanediol diacrylate (HDDA) based on 100 parts by weight of the monomers.

2. A method of preparing an adhesive composition, comprising:
mixing monomers comprising 2-ethylhexyl acrylate (EHA), isobornyl acrylate (IBOA), and 2-hydroxyethyl acrylate (HEA) with a photoinitiator;
preparing a resin by irradiating the mixture with ultraviolet (UV) light; and
mixing hexanediol diacrylate (HDDA) and a photoinitiator with the resin.

3. The method of claim 2, wherein the adhesive composition comprises, based on the total weight of the monomers, 50 to 60 wt% of 2-ethylhexyl acrylate (EHA), 20 to 30 wt% of isobornyl acrylate (IBOA), and 15 to 25 wt% of 2-hydroxyethyl acrylate (HEA), and
0.05 to 0.5 parts by weight of hexanediol diacrylate (HDDA) based on 100 parts by weight of the monomers.

4. The method of claim 2, wherein the resin has a viscosity (at 25 °C) of 800 to 5,000 cPs, and the adhesive composition has a viscosity (at 25 °C) of 800 to 5,000 cPs.

5. A method of manufacturing a transparent adhesive tape, comprising:
forming a laminate comprising a lower release film, an adhesive layer, and an upper release film; and
irradiating the upper release film and the lower release film of the laminate with ultraviolet (UV) light,
wherein the adhesive layer is formed of the adhesive composition of claim 1.

6. The method of claim 5, wherein the UV irradiation includes a first irradiation and a second irradiation, an intensity of the first irradiation is 5 mW/cm² or less, and an intensity of the second irradiation is greater than the intensity of the first irradiation.

7. The method of claim 5, wherein a total light irradiation dose during the UV irradiation is 1,500 mJ/cm² or more.
